Europäisches Patentamt

European Patent Office

Office européen des brevets

(19)

(11) Veröffentlichungsnummer: **0 249 709 B1**

(12) **EUROPÄISCHE PATENTSCHRIFT**

(45) Veröffentlichungstag der Patentschrift: **31.07.91**

(51) Int. Cl.⁵: **A61G 5/00, B62K 7/00**

(21) Anmeldenummer: **87105393.0**

(22) Anmeldetag: **11.04.87**

(54) **Versehrtenhilfsgerät.**

(30) Priorität: **19.06.86 DE 3620597**

(43) Veröffentlichungstag der Anmeldung:
**23.12.87 Patentblatt 87/52**

(45) Bekanntmachung des Hinweises auf die
Patenterteilung:
**31.07.91 Patentblatt 91/31**

(84) Benannte Vertragsstaaten:
**AT BE CH DE ES FR GB IT LI NL SE**

(56) Entgegenhaltungen:
**DE-A- 2 850 755**
**DE-A- 3 303 218**
**US-A- 4 518 057**
**US-A- 4 580 652**

(73) Patentinhaber: **Ernst, Heinrich**
**Gantenstrasse 205**
**W-4430 Steinfurt-Borghorst(DE)**

(72) Erfinder: **Ernst, Heinrich**
**Gantenstrasse 205**
**W-4430 Steinfurt-Borghorst(DE)**
Erfinder: **Nöll, Achim**
**Fischerweg 6**
**W-6400 Fulda/Kämmerzell(DE)**

(74) Vertreter: **Habbel, Hans-Georg, Dipl.-Ing.**
**Postfach 3429 Am Kanonengraben 11**
**W-4400 Münster(DE)**

EP 0 249 709 B1

**Beschreibung**

Die Erfindung bezieht sich auf ein Versehrtenhilfsgerät gemäß dem Oberbegriff des Hauptanspruches.

Für gehbehinderte Personen sind Rollstühle bekannt. Hierbei kann der Rollstuhl von der gehbehinderten Person selbst betätigt werden. Es sind auch motorisch betriebene Rollstühle bekannt und schließlich sind Rollstühle bekanntgeworden, die den Transport der gehbehinderten Person durch Dritte ermöglichen.

Aus der DE-OS 33 03 218 ist ein Spezialrollstuhl bekanntgeworden, an den ein fahrradartiges Antriebsgerät angeschlossen werden kann, so daß es damit möglich wird, rollstuhlgebundene Personen dreiradähnlich zu transportieren, beispielsweise auf Spazierfahrten oder auf kleineren Stadtfahrten. Diese bekannte Vorrichtung hat den Nachteil, daß ein Spezialrollstuhl eingesetzt werden muß, der nur in Verbindung mit dem Antriebsrad ein dreiradartiges Gerät ergibt. Bei sehr vielen gehbehinderten Personen ist ein Wechsel des Rollstuhles nicht möglich, sondern der Rollstuhl bildet für diese gehbehinderte Person einen Umgebungsbereich, der für ihn lebenswichtig und von großer Bedeutung ist. Für solche Personen ist der Einsatz eines nur für bestimmte Stadt- oder Spazierfahrten bestimmten Spezialrollstuhles nicht nur aus Kostengründen, sondern auch aus psychologischen Gründen nicht einsetzbar.

Aus der gattungsbildenden DE-OS 28 50 755 ist ein Versehrtenhilfsgerät bekannt, das als Selbstfahrer ausgebildet ist. Der Behinderte kann nunmehr mit dem gewohnten, manuell bewegbaren Rollstuhl auf den Selbstfahrer fahren, den Rollstuhl auf dem Selbstfahrer festsetzen und nun mittels des Selbstfahrers, also des Versehrtenhilfsgerätes größere und verhältnismäßig unwegsame Wegstrecken überwinden. Am Zielort angekommen, kann dieser gewohnte manuell bewegbare Rollstuhl ohne Zuhilfenahme weiterer Personen abgesetzt werden. Eine solche Einrichtung hat den Nachteil, daß beispielsweise behinderte Kinder sich dieses Gerätes nicht bedienen können und dürfen.

Der Erfindung liegt die Aufgabe zugrunde, ein Versehrtenhilfsgerät zu schaffen, mit dem es möglich ist, einen üblichen Rollstuhl durch ein fahrradartiges Hilfsgerät zu transportieren, so daß dadurch die Möglichkeit gegeben wird, kleinere Stadtfahrten oder Spazierfahrten mit einer gehbehinderten Person oder einem behinderten Kind durchzuführen, wobei aber die gehbehinderte Person in ihrem üblichen Rollstuhl verbleibt und gleichzeitig die Betreuungsperson zugegen ist.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, schlägt die Erfindung ein dreiradartiges Transportfahrzeug vor, das in seinem vorderen Bereich eine Plattform aufweist, auf die in einer "Auffahrstellung" der übliche Rollstuhl einer gehbehinderten Person aufgefahren werden kann. Der Rollstuhl wird dann auf der Plattform verriegelt und die Plattform kann dann in eine "Transportstellung" angehoben werden, so daß die Plattform bodenfrei wird. Auf diese Weise wird im vorderen Bereich eines fahrradartigen Fahrzeuges der Rollstuhl sicher gelagert. Der Rollstuhlbenutzer blickt in Fahrtrichtung und verbleibt in seinem Rollstuhl mit den hier ggf. vorhandenen zusätzlichen Hilfseinrichtungen.

Mit dem erfindungsgemäßen Versehrtenhilfsgerät ist nunmehr ein leichter Transport eines Rollstuhlpatienten möglich, es können Spazierfahrten durchgeführt werden und bei Einsatz, beispielsweise in einem Krankenhaus oder Altenheim, kann mit einem einzigen Versehrtenhilfsgerät, unabhängig von der Ausbildung und Konstruktion der ggf. unterschiedlichen Rollstühle, mehreren Patienten zu einer Ausfahrt verholfen werden.

Ausführungsbeispiele der Erfindung werden nachfolgend anhand der Zeichnungen erläutert. Die Zeichnungen zeigen dabei in

Fig. 1    eine erste Ausführungsform eines Versehrtenhilfsgerätes, in

Fig. 2    eine Teilansicht auf eine zweite Ausführungsform eines Versehrtenhilfsgerätes, in

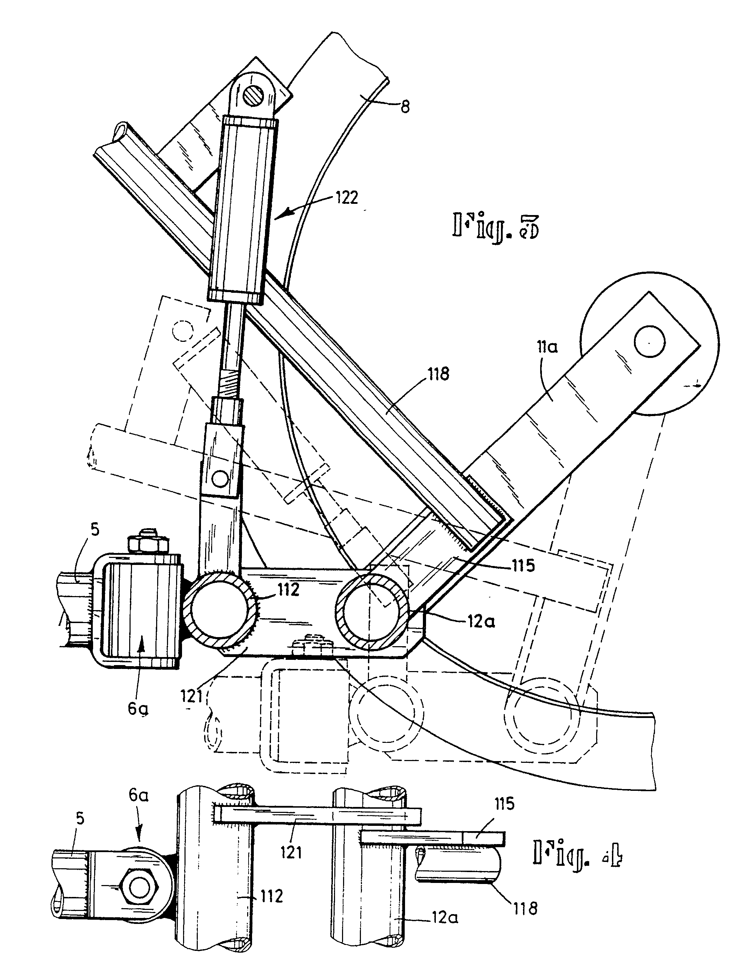

Fig.3    in größerem Maßstab und im Schnitt eine Ansicht auf die Verbindung zwischen Schwenklenker und Lenksäule und in

Fig. 4    eine Draufsicht auf einen Teil der Anordnung gemäß Fig. 3.

In den Zeichnungen ist ein fahrradartiges Transportfahrzeug 1 dargestellt, das ein als Einzelrad ausgebildetes Hinterrad 2 aufweist. Das Fahrzeug wird über eine übliche Tretkurbel 3 angetrieben und ist beispielsweise mit einem Sattel 4 ausgerüstet. An das Hinterrad 2 schließt ein Rahmen 5 an, der an seinem vorderen Ende in einer Lenksäule 6 endet. An die Lenksäule 6 greift ein vorderes Radpaar 7 an, das aus den beiden Einzelrädern 8 und 9 besteht, die je in einer Radgabel 10 und 11 entsprechend gelagert sind. Die Radgabeln 10 und 11 werden über eine Traverse 12 miteinander verbunden, die mittig eine nach vorne gerichtete Lenkgabel 14 trägt, die an die Lenksäule 6 anschließt. Hierdurch wird das Fahrzeug lenkfähig, wobei an die Traverse 12 nach rückwärts und oben gerichtet ein als Lenker 15 ausgebildeter Rahmen anschließt.

Die Lenksäule 6 ist gleichzeitig als Hubvorrichtung ausgebildet udn trägt an ihrem unteren Ende eine Plattform 16. Ober die Hubvorrichtung der Lenksäule 6 kann die Plattform 16 auf- und abbewegt werden, beispielsweise bei dem in der Zeichnung dargestellten Ausführungsbeispiel über einen Spindeltrieb, von dem die Betätigungsstange 17 und die Handkurbel 18 erkennbar ist. Die Handkurbel 18 ist dabei außerdem in einem kardanartigen Gelenk 19 gelagert, so daß die Handkurbel 18 verstellt werden kann.

An der vorderen Seite der Traverse 12 ist eine Verriegelungsvorrichtung 20 vorgesehen, die bei dem dargestellten Ausführungsbeispiel über Riegelstifte 21 und 22 in die Speichen des in der Zeichnung nicht dargestellten, aber auf die Plattform 16 aufgefahrenen Rollstuhles einführbar sind und damit hinter die Felgen der Hinterräder des Rollstuhles greifen, so daß der Rollstuhl dadurch sicher gegen Bewegungen auf der Plattform 16 gelagert ist.

Die sichere Lagerung des Rollstuhles auf der Plattform 16 wird durch Lagermulden erhöht, wobei in der Zeichnung die zum Betrachter hingerichtete Lagermulde 23 erkennbar ist.

Wie aus der Darstellung der Zeichnung ersichtlich, ist die Verriegelungsvorrichtung 20 so gestaltet, daß durch die umgeklappte Handkurbel 18 ein Lösen der Verriegelungssstifte 21 und 22 ausgeschaltet wird, gleichzeitig aber auch verhindert wird, daß durch Vibrationsbewegungen die Spindel sich selbsttätig drehen kann. Hierdurch wird eine sichere Halterung der Plattform 16 in der hochgestellten Lage bzw. "Transportstellung" erreicht.

Aus den Zeichnungen ist weiterhin erkennbar, daß die beiden Vorderräder 8 und 9 jeweils mit Trommelbremsen 24 ausgerüstet sind, so daß dadurch das recht hohe Gewicht des Rollstuhles mit der darin sitzenden Person sicher vom Führer des Transportfahrzeuges 1 beherrscht werden kann.

Während in den Zeichnungen das Transportfahrzeug 1 als normales Fahrrad dargestellt ist, ist es selbstverständlich möglich, daß das Fahrzeug als Motorfahrzeug gestaltet sein kann. Auch ist es möglich, die Verstellung der Plattform 16 in der Höhe anstelle durch eine Spindel durch eine hydraulische Hubvorrichtung vorzunehmen, die hand- oder motorbetätigt sein kann.

Durch die vorauf beschriebene Einrichtung ist es möglich, auch Rollstühle in einem Versehrtenhilfsgerät zu transportieren, die beispielsweise zusammenfaltbar sind, also für einen Anschluß an eine selbständige Antriebseinrichtung nicht stabil genug ausgebildet sind.

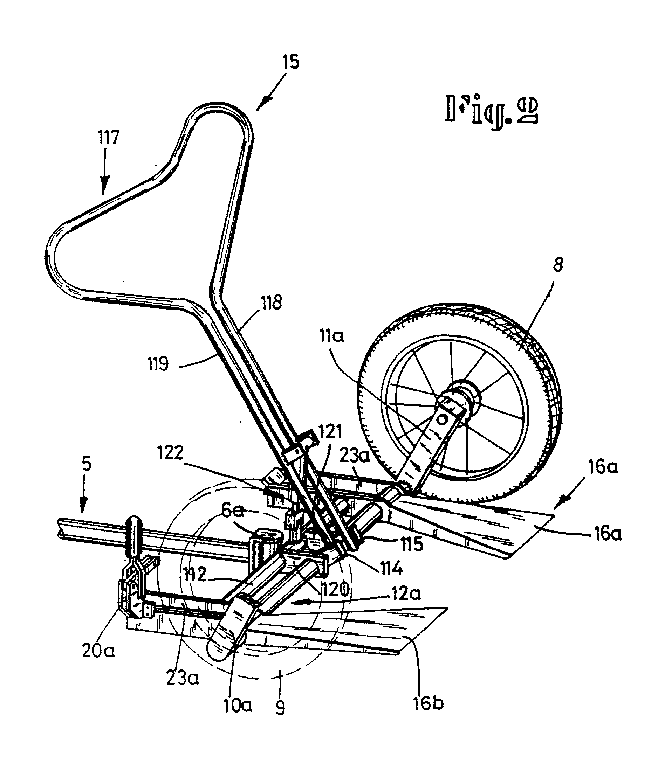

In den Fig. 2 und 4 ist eine abgeänderte Ausführungsform dargestellt. Hierbei ist in Fig. 2 der vordere Teil des Transportfahrzeuges dargestellt und es sind der Rahmen 5, die Räder 8 und 9 und der Lenker 15 erkennbar.

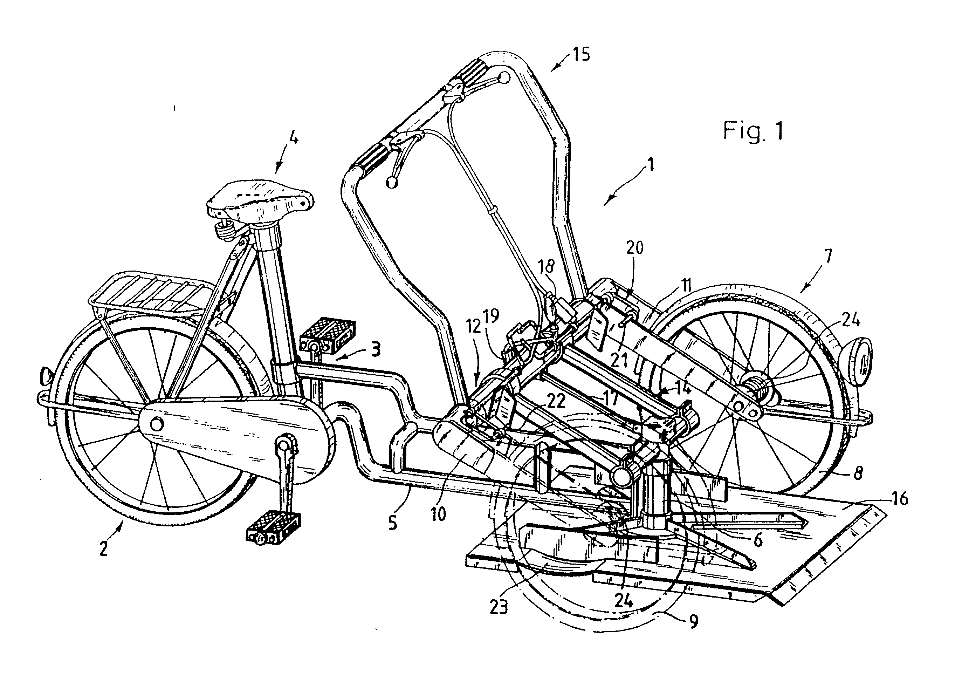

In Abwandlung zu der Ausführungsform gemäß Fig. 1 besteht die Plattform 16 aus Auffahrschienen 16a und 16b. Der Rahmen 5 endet an seinem vorderen Ende in einer Lenksäule 6a. Anstelle der Radgabeln sind Schwenklenker 10a und 11a vorgesehen. Die einenendes schwenkbar an die Räder 8 und 9 anschließenden Schwenklenker 10a und 11a tragen anderenendes ortsfest, beispielsweise durch Verschweißen, eine Traverse 12a. Diese Traverse ist schwenkbar an die Auffahrschienen 16a und 16b angeschlossen, beispielsweise dadurch, daß die Auffahrschienen muldenförmig ausgebildet sind und die Traverse 12a die hochgestellten Seitenwände dieser Mulde schwenkbar durchquert.

An die Traverse 12a schließt starr, z.B. durch Verschweißen und vorzugsweise unter Zwischenschaltung eines Lenkerpaares 114 und 115, der Lenker 15 an, dessen Betätigungsteil 117 nach unten hin durch Verlängerungsstreben 118 und 119 verlängert ist. Es ist erkennbar, daß nunmehr bei einer nach unten gerichteten Kippbewegung des Lenkers 15 die Schwenklenker 10a und 11a eine Bewegung um ihr Radlager ausführen, so daß dadurch gleichzeitig die Auffahrschienen 16a und 16b nach unten gelangen.

An der Lenksäule 6a ist starr eine zweite Traverse 112 angebracht, beispielsweise durch Verschweißen und diese Traverse 112 schließt endseitig starr an die Auffahrschienen 16a und 16b an. Die Traverse 12a ist in Fahrtrichtung gesehen vor der Traverse 112 gelagert und mit der Traverse 112 über Flansche 120 und 121 verbunden, die starr an der Traverse 112 anschließen, aber in denen sich die Traverse 12 drehen kann.

Zusätzlich stützen sich die Verlängerungsstreben 118 und 119 über eine Gasdruckfeder 122 an der Traverse 112 ab, so daß dadurch die Hubbewegung der Auffahrschienen 16a und 16b aus der bodennahen Stellung in die Transportstellung unterstützt wird.

Bei 20a ist eine Verriegelungsvorrichtung dargestellt, die bei auf die Auffahrschienen 16a und 16b aufgefahrenem Rollstuhl in die Speichen der Rollstuhlräder eingeklappt werden kann, so daß dadurch die erforderliche Arretierung des Rollstuhles auf den Auffahrschienen 16a und 16b erfolgt.

Dadurch, daß die Traverse 112 - wie in Fig. 2 deutlich zu erkennen - die Auffahrschienen 16a und 16b durchquert, werden im hinteren Bereich der Auffahrschienen 16a und 16b Lagermulden 23a geschaffen, die die Sicherung des Rollstuhles in der auf die Auffahrschienen 16a und 16b aufgefahrenen Stellung verbessern.

Um ein ungewolltes Absenken des Rollstuhles zusammen mit den Auffahrschienen 16a und 16b während des Betriebes zu vermeiden, können Stellmittel vorgesehen sein, die den Lenker 15 in der hochgestellten Lage arretieren und die ein Absenken des Lenkers 15 nur ermöglichen, wenn diese Stellmittel gelockert werden.

**Patentansprüche**

1. Versehrtenhilfsgerät mit einer von einem Transportfahrzeug (1) getragenen, in ihrer Größe zur Aufnahme eines Rollstuhles ausgebildeten Plattform (16), die aus einer "Auffahrstellung" in eine bodenentfernte "Transportstellung" höhenverstellbar ist, der Rollstuhl in der "Transportstellung" auf der Plattform (16) verriegelbar ist und bei welchem das Transportfahrzeug (1) als Dreirad mit einem rückwärtigen Einzelrad (2) und einem vorderen Radpaar (7) ausgebildet ist, dadurch gekennzeichnet, daß
die Räder (8, 9) des Radpaares (7) beiderseits der Plattform (16) angeordnet sind, vom rückwärtigen Einzelrad (2) ein Rahmen (5) zu einer im Bereich der Plattform (16) angeordneten Lenksäule (6, 6a) führt,
der Rahmen (5) im Bereich des Einzelrades (2) einen Sitz (4) trägt und
das Radpaar (7) über eine Traverse (12, 12a) an die Lenksäule (6, 6a) um eine vertikale Achse schwenkbar anschließt und einen Lenker (15) aufweist, der bis in den Bedienungsbereich des Sitzes (4) reicht.

2. Versehrtenhilfsgerät nach Anspruch 1, dadurch gekennzeichnet, daß die Plattform (16) bodenparallel aus der "Auffahrstellung" in die "Transportstellung" verstellbar ist.

3. Versehrtenhilfsgerät nach Anspruch 1 und 2, dadurch gekennzeichnet, daß die Lenksäule (6) gleichzeitig als Hubvorrichtung für die Plattform ausgebildet ist.

4. Versehrtenhilfsgerät wenigstens nach Anspruch 3, dadurch gekennzeichnet, daß die Lenksäule (6) als Teleskopsäule ausgebildet ist, die die Plattform (16) höhenverstellbar trägt, andererseits aber die Plattform (16) drehfest mit der Lenksäule (6) gekoppelt ist, so daß die Plattform (16) die gleichen Drehbewegungen wie die Lenksäule (6) ausführt.

5. Versehrtenhilfsgerät wenigstens nach Anspruch 1, dadurch gekennzeichnet, daß die Plattform (16) mit die Hinterräder des aufzufahrenden Rollstuhles aufnehmenden Lagermulden (23, 23a) ausgerüstet ist.

6. Versehrtenhilfsgerät wenigstens nach Anspruch 1, dadurch gekennzeichnet, daß die Traverse (12) mittig eine an die Lenksäule (6) anschließende Lenkgabel (14) trägt.

7. Versehrtenhilfsgerät wenigstens nach Anspruch 1 und 6, dadurch gekennzeichnet, daß die Traverse (12) mit einer in die Laufräder des Rollstuhles einführbaren Verriegelungsvorrichtung (20) versehen ist.

8. Versehrtenhilfsgerät nach einem oder mehreren der vorhergehenden Ansprüche, dadurch gekennzeichnet, daß die Höhenverstellung der Plattform (16) spindelbetätigt ist und eine Handkurbel (18) gleichzeitig zur Verriegelung der Verriegelungsvorrichtung (20) für die Rollstuhlräder dient

9. Versehrtenhilfsgerät nach einem oder mehreren der vorhergehenden Ansprüche 7 und 8, dadurch gekennzeichnet, daß die Hubvorrichtung für die Plattform (16) hydraulisch betätigbar ist.

10. Versehrtenhilfgerät nach einem oder mehreren der vorhergehenden Ansprüche 1 bis 9, dadurch gekennzeichnet, daß die beiden Vorderräder (8, 9) mit Trommelbremsen (24) ausgerüstet sind.

11. Versehrtenhilfsgerät nach Anspruch 1 und 2, dadurch gekennzeichnet, daß die Plattform (16) als zwei parallele Auffahrschienen (16a,16b) ausgebildet ist,
die Radgabeln als Schwenklenker (10a, 11a) ausgebildet sind, die an ihrem dem Radlager entfernten Ende ortsfest eine Traverse (12a) tragen, an die ortsfest der Lenker (15) anschließt,
daß an der Lenksäule (6a) ortsfest eine zweite Traverse (112) mittig hinsichtlich ihrer Längserstreckung befestigt ist, die endseitig starr an die Auffahrschienen (16a, 16b) anschließt und daß die Traverse (12a) in Fahrtrichtung gesehen vor der Traverse (112) liegt und die Auffahrschienen (16a, 16b) schwenkbar trägt und die Traversen (12, 112) im Abstand voneinander unveränderlich sind.

12. Versehrtenhilfsgerät nach Anspruch 11, dadurch gekennzeichnet, daß sich der Lenker (15) nachgiebig auf der Traverse (112) abstützt.

13. Versehrtenhilfsgerät nach Anspruch 11 und 12, dadurch gekennzeichnet, daß der Lenker (15) an die Traverse (12a) unter Zwischenschaltung eines sich von der Achse der Traverse (12a) weg erstreckenden Lenkerpaares (114, 115) anschließt.

**Claims**

1. An aid for the disabled with a platform (16) carried by a transport vehicle (1) and constructed to be of a size to accommodate a wheelchair, which platform is height-adjustable from a loading position into a transport position remote from the ground, the wheel chair being lockable to the platform (16) in the transport position and wherein the transport vehicle (1) is constructed as a three-wheeler with a single rear wheel (2) and a front wheel pair (7), characterized in that the wheels (8, 9) of the wheel pair (7) are arranged on each side of the platform (16), in that a frame (5) runs from the single rear wheel (2) to a steering column (6, 6a) arranged in the region of the platform (16), in that the frame (5) carries a seat (4) in the region of the single rear wheel (2) and in that the wheel pair (7) is connected by means of a crossbar (12, 12a) to the steering column (6, 6a) to be swivellable about a vertical axis and comprises handlebars (15), which reach into the operating area of the seat (4).

2. An aid for the disabled according to claim 1, characterized in that the platform (16) is adjustable from the loading position to the transport position in parallel with the ground.

3. An aid for the disabled according to claim 1 and claim 2, characterized in that the steering column (6) is constructed at the same time as a lifting device for the platform.

4. An aid for the disabled according at least to claim 3, characterized in that the steering column (6) is constructed as a telescopic column, which carries the platform (16) in height-adjustable manner, but on the other hand the platform (16) is coupled for rotation with the steering column (6), such that the platform (16) effects the same rotational movements as the steering column (6).

5. An aid for the disabled according at least to claim 1, characterized in that the platform (16) is equipped with bearing troughs (23, 23a) accommodating the rear wheels of the wheel chair to be loaded.

6. An aid for the disabled according at least to claim 1, characterized in that the crossbar (12) carries in the centre a steering fork (14) connected to the steering column (6).

7. An aid for the disabled according at least to claim 1 and 6, characterized in that the crossbar (12) is provided with a locking device (20) which can be introduced into the running wheels of the wheelchair.

8. An aid for the disabled according to one or more of the preceding claims, characterized in that the height adjustment of the platform (16) is spindle operated and in that a crank handle (18) serves at the same time to lock the locking device (20) for the wheelchair wheels.

9. An aid for the disabled according to one or more of the preceding claims 7 and 8, characterized in that the lifting device for the platform (16) is hydraulically operable.

10. An aid for the disabled according to one or more of the preceding claims 1 to 9, characterized in that the two front wheels (8, 9) are equipped with drum brakes (24).

11. An aid for the disabled according to claim 1 and claim 2, characterized in that the platform (16) is constructed as two parallel loading rails (16a, 16b), in that the wheel forks are constructed as swivel rods (10a, 11a), which carry a crossbar (12a) fixed at their ends remote from the wheel bearings, to which crossbar (12a) the handlebars (15) are connected, in that a second crossbar (112) is fastened fixedly to the steering column (6a) centrally with respect to the longitudinal extent of the second crossbar (112), which crossbar (112) connects at its ends rigidly with the loading rails (16a, 16b) and in that the crossbar (12a) lies in front of the crossbar (11) when viewed in the direction of travel and carries the loading rails (16a, 16b) swivellably and in that the crossbars (12, 112) are unalterable in their separation from each other.

12. An aid for the disabled according to claim 11, characterized in that the handlebars (15) are supported flexibly on the crossbar (112).

13. An aid for the disabled according to claim 11 and claim 12, characterized in that the handlebars (15) connect to the crossbar (12a) with the intermediate connection of a pair of connecting rods (114, 115) extending away from the axis of the crossbar (12a).

## Revendications

1. Appareil auxiliaire pour handicapés, comprenant une plate-forme (16) portée par un véhicule transporteur (1) et qui est configurée en dimension pour recevoir un fauteuil roulant, et qui est réglable en hauteur pour passer d'une "position d'accès " dans une "position de transport" éloignée du sol, le fauteuil roulant pouvant être verrouillé sur la plate-forme (16) dans la "position de transport", et dans lequel le véhicule transporteur (1) est constitué par un tricycle possédant une roue simple arrière (2) et une paire de roues avant (7), caractérisé en ce que les roues (8,9) de la paire de roues (7) sont disposées de part et d'autre de la plate-forme (16), en ce que, de la roue simple arrière (2) part un cadre (5) menant à une colonne de direction (6, 6a) disposée dans la région de la plate-forme, en ce que le cadre (5) porte un siège (4) dans la région de la roue simple (2), et en ce que la paire de roues (7) est reliée à la colonne de direction (6, 6a) par une traverse (12,12a) de manière à pouvoir pivoter autour d'un axe vertical, et présente un guidon (15) qui se prolonge jusque dans la région de manoeuvre du siège (4).

2. Appareil auxiliaire pour handicapés selon la revendication 1, caractérisé en ce que la plate-forme (16) peut être déplacée de la "position d'accès" à la "position de transport" en restant parallèle au sol.

3. Appareil auxiliaire pour handicapés selon les revendications 1 et 2, caractérisé en ce que la colonne de direction (6) constitue en même temps le dispositif élévateur pour la plate-forme.

4. Appareil auxiliaire pour handicapés, au moins selon la revendication 3, caractérisé en ce que la colonne de direction (6) est constituée par une colonne télescopique qui porte la plate-forme (16) mobile en hauteur, mais que, par ailleurs, la plate-forme (16) est accouplée solidairement en rotation à la colonne de direction (6), de sorte que la plate-forme (16) décrit les mêmes mouvements de rotation que la colonne de direction (6).

5. Appareil auxiliaire pour handicapés, au moins selon la revendication 1, caractérisé en ce que la plate-forme (16) est équipée de cavités de logement (23,23a) qui reçoivent les roues arrière du fauteuil roulant qu'il s'agit d'y placer.

6. Appareil auxiliaire pour handicapés, au moins selon la revendication 1, caractérisé en ce que la traverse (12) porte en position centrale une fourche de direction (14) qui se fixe à la colonne de direction (6).

7. Appareil auxiliaire pour handicapés selon les revendications 1 et 6, caractérisé en ce que la traverse (12) est munie d'un dispositif de verrouillage (20) qui peut être engagé dans les roues du fauteuil roulant.

8. Appareil auxiliaire pour handicapés selon l'une des revendications précédentes, caractérisé en ce que le réglage en hauteur de la plate-forme (16) est actionné par une vis et qu'une manivelle (18) sert en même temps à verrouiller le dispositif de verrouillage (20) agissant sur les roues du fauteuil roulant.

9. Appareil auxiliaire pour handicapés selon l'une des revendications précédentes 7 et 8, caractérisé en ce que le dispositif de levage agissant sur la plate-forme (16) peut être actionné hydrauliquement.

10. Appareil auxiliaire pour handicapés selon une ou plusieurs des revendications précédentes 1 à 9, caractérisé en ce que les deux roues avant (8, 9) sont équipées de freins à tambour (24).

11. Appareil auxiliaire pour handicapés selon les revendications 1 et 2, caractérisé en ce que la plate forme (16) est réalisée sous la forme de deux rails d'accès parallèles (16a, 16b), que les fourches des roues sont constituées par des leviers oscillants (10a, 11a) qui portent, à leur extrémité la plus éloignée des paliers des roues, une traverse (12a) fixe à laquelle le guidon (15) est fixé en position fixe, en ce qu'à la colonne de direction (6a) est fixée rigidement une deuxième traverse (112), en position centrale par rapport à son extension longitudinale, qui est raccordée rigidement à une de ses extrémités aux rails d'accès (16a, 16b) et en ce que la traverse (12a) se trouve en avant de la traverse (112), considéré dans le sens de la marche, et porte les rails d'accès (16a, 16b) mobiles en oscillation, et les traverses (12, 112) sont placées à un écartement mutuel invariable.

12. Appareil auxiliaire pour handicapés selon la revendication 11, caractérisé en ce que le guidon (15) prend appui sur la traverse (112) par une liaison souple.

13. Appareil auxiliaire pour handicapés selon les revendications 11 et 12, caractérisé en ce que le guidon (15) se raccorde à la traverse (12a) avec interposition d'une paire de biellettes (114,115) qui part de l'axe de la traverse (12a).

Fig. 1

**Fig. 2**

Fig. 3

8

122

11a

118

115

5

112

12a

6g

121

6a

5

115

121

112

12a

118

Fig. 4